# EUROPEAN PATENT APPLICATION

(11) **EP 2 124 428 A1**
(43) Date of publication of application: **25.11.2009**
(21) Application number: 08156597.0
(22) Date of filing: 20.05.2008
(51) Int. Cl.: H04M 11/04

(54) **An alarm and a communications device therefor**

(71) Applicant: CSL (Dualcom) Limited, Harefield, Middlesex UB9 6NZ (GB)
(72) Inventor: Hollett, Philip, Bucks, HP27OJW (GB); Banks, Simon, Somerset BA22 8NL (GB); Mockford, Derf, Bucks, HP22 6PH (GB)
(74) Representative: Howson, Richard G.B.

(57) **Abstract**

A communications device for use in an alarm as part of an alarm network, wherein, the device is arranged to establish a first radio link, a second radio link and a wired link with a part of the network remote from the alarm so as to communicate therewith, and wherein the device is further arranged to attempt to communicate with the remote part of the network in a first operation via the first radio link and then in a second operation via the second radio link.

## Description

### TECHNICAL FIELD

This invention relates to alarms, such as intruder alarms or fire alarms, to communications devices therefor and to methods of operating the same.

### BACKROUND

Intruder alarms that are arranged to detect the presence of an intruder and to provide an alert indicative thereof are often found in domestic, commercial and other premises.

Some intruder alarms are connected to form part of an alarm network over which the alarm can communicate with a remote alarm receiving centre (ARC). Upon an alarm condition being met, such as the detection of the presence of an intruder, an alarm of this type issues an alarm signal indicative of this and transmits it to the ARC over the network. Thus, the alarm is "raised". The ARC then takes appropriate action, which might include informing a predetermined person with responsibility for the premises, such as the owner, that an alarm signal has been received or similarly informing the police. The owner or, as the case may be, the police may then investigate further.

The connection of an intruder alarm to form part of an alarm network in this way is advantageous in that the ARC acts on the alarm signal to inform the predetermined person or the police. Thus, there is no need for an owner of alarmed premises to rely on a neighbour or passer-by taking notice that an alarm has been raised and then acting responsibly in response thereto. For this reason, some intruder alarms that are connected to a network do not sound an alarm local to the alarmed premises, and instead rely on the alarm being raised at the ARC and passed on as described above. This has the advantage that an intruder would not be disturbed by the raising of the alarm so may be apprehended at the premises.

One drawback however is that, should the network or the alarm's connection thereto become inoperable, the alarm signal issued by the alarm would not be passed on to the ARC. In such circumstances, the alarm may not be raised.

Existing fire alarms, which may also communicate with an ARC over an alarm network, suffer from similar drawbacks.

It is an object of this invention to at least address one or more of these drawbacks.

### SUMMARY

According to one aspect of this invention, there is provided a communications device for use in an alarm as part of an alarm network, wherein, the device is arranged to establish a first radio link, a second radio link and a wired link with a part of the network remote from the alarm so as to communicate therewith, and wherein the device is further arranged to attempt to communicate with the remote part of the network in a first operation via the first radio link and then in a second operation via the second radio link.

The alarm may be an intruder alarm. The alarm may be a fire alarm. The alarm may be another type of alarm.

The device may be further arranged to carry out the steps of the following method.

According to a second aspect of this invention, there is provided a method of operating a communications device for use in an alarm, the device being arranged to establish a first radio link, a second radio link and a wired link with a part of the network remote from the alarm so as to communicate therewith, the method comprising the steps of the device:
a) in a first operation, attempting to communicate with the remote part of the network via the first radio link; and then
b) in a second operation, attempting to communicate with the remote part via the second radio link.

The method may include the additional step of, in an additional operation, attempting to communication with the remote part via the wired link. The additional operation may be carried out before, after or between the first and second operation. In an embodiment, it is carried out as a third operation subsequent to the second operation.

In the first operation, the device may make a plurality of attempts to communicate with the remote part. In the second operation, the device may make a plurality of attempts to communicate with the remote part. In the additional operation, the device may make a plurality of attempts to communicate with the remote part. Each attempt in the first operation and/or each attempt in the second operation and/or each attempt in the additional operation may comprise the transmission by the device of information.

The communication with the remote part of the network may comprise the transfer of information indicative of the status of the device. The status may comprise whether or not the device is operational. Whether or not the device is operational may comprise whether or not the first radio link is operational, whether or not the second radio link is operational, and/or whether or not the wired link is operational. Whether or not the device is operational may comprise none of the foregoing; and may comprise an indication that the device is powered. The status may comprise whether or not an alarm condition has been met. The status may comprise whether or not the device is connected to one, more or all of the first radio link, the second radio link and the wired link, and may comprise whether or not the or each link is operable.

The information indicative of the status of the device may comprise a polling signal indicative of the device being operational. The information indicative of the status of the device may comprise an alert signal indicative of the status being such that human intervention is desirable. The alert signal may be an alarm signal indicative of the alarm condition being met. The alert signal may be a link failure signal indicative of one or more of the first radio link, the second radio link and the wired link not being operational.

The communication with the remote part of the network may comprise the device transmitting thereto the polling signal, which may take place in a standby mode of operation of the device. The communication with the remote part of the network may comprise the device transmitting thereto the alarm signal, which may take place in an alarm mode of operation of the device. The communication with the remote part of the device may comprise the device transmitting a link failure signal indicative of one or more of the first radio link, the second radio link and the wired link not being operational; which may take place in a link failure mode of operation of the device.

The method may include the step of the device entering one or more of the modes of operation.

The method may include the step of performing, in the standby mode of operation, the first operation so as to transmit periodically the polling signal via the first radio link, and, upon the device receiving an error signal, performing the second operation so as to transmit a confirmatory signal confirming receipt by the device of the error signal. The device may then continue to perform the first operation.

The error signal may be received by the device over the second radio link. The error signal may be indicative of at least one polling signal not having been received by the or another remote part of the network over the first radio link. The period may be between one minute and one hour. The period may be less than 30 minutes. The period may be approximately 10 minutes.

The method may include the step of the device entering the alarm mode of operation upon the alarm condition being met. The alarm condition may be met when the device receives an input indicative of this. The method may include the step of the device receiving an input indicative of the alarm condition being met.

The method may include the step of the device detecting whether or not the first radio link and/or whether or not the second radio link is/are operable; and/or may include the step of detecting whether or not the wired link is operable. The method may include the step of the device entering the link failure mode of operation upon detecting that one, two or more of these links is not operable.

Upon entering the alarm mode and/or upon entering the failure link mode, the method may include the step of the device performing the first operation so as to make a predetermined number of attempts to transmit the alert signal via the first radio link; and then performing the second operation so as to make a predetermined number of operations to transmit the alert signal via the second radio link; and the method may further include the step of performing the third operation so as to make a predetermined number of attempts to transmit the alert signal via the wired link.

Fewer than 10 attempts may be made in each operation. No more than five attempts may be made in each operation. Three attempts may be made in the first operation. Two attempts may be made in the second operation. Five attempts may be made in the third operation.

The first and/or second radio link may make use of a mobile telephone radio frequency and/or mobile telephone communications protocol. One of the first and second radio link may be a GPRS link. The other of the first and second radio link may be a GSM data link in which GPRS is not used. In an embodiment, the first radio link is a GPRS link and the second radio link is the GSM data link. The wired link may be a fixed telephone line, sometimes referred to as a "landline". The wired link may be a PSTN line. The wired link may be a DSL link; it may be an ADSL link, such as a broadband link.

The method may include the device detecting whether or not one, more or all of the first radio link, the second radio link and the wired link are operational. The method may include the device, upon checking that one, more or all of the first radio link, the second radio link and the wired link is or are not operational, attempting to communicate with the remote part via the, each, or one of, the remaining links. The method may include attempting to transmit the polling signal in this way.

The device may include logging memory means arranged to retain a record of one, more or all attempts at outgoing communication made by the device. The record may include information indicative of one, more or all of: whether or not the or each attempt was successful; the number or attempts made; the link over which the or each attempt was made; the time and/or date of the or each attempt; whether the attempt was to transmit a polling signal or an alert signal. The device may be further arranged to transmit information indicative of the record to the or another remote part of the network.

The device may be arranged to receive modifying information over one or more of the first radio link, the second radio link and the wired link so as to modify the operation of the device. The device may be arranged to receive modifying information and in response thereto to change the grade of the alarm of which the device is part. The grade may be determined in accordance with standard EN 50131. In response to receiving the modifying information, the device may be arranged to change the frequency with which it attempts to transmit the polling signal over one more or all of the first radio link, the second radio link and the wired link.

In a third aspect of this invention, there is provided a communications device for use in an alarm as part of an alarm network, the device including the memory logging means defined hereinabove. Optional features of the first aspect may be optional features of this third aspect.

In a fourth aspect of this invention, there is provided a method of operating a communications device for use in an alarm as part of an alarm network, the method including the device retaining in the logging memory means defined hereinabove the record. Optional features of the first aspect may be optional features of this fourth aspect.

In a fifth aspect of this invention, there is provided a communications device for use in an alarm as part of an alarm network, the device arranged to receive the modifying information defined hereinabove over one or more of the first radio link, the second radio link and the wired link so as to modify the operation of the device. The device may be arranged to receive modifying information and in response thereto to change the grade of the alarm of which the device is part. The grade may be determined in accordance with standard EN 50131. In response to receiving the modifying information, the device may be arranged to change the frequency with which it attempts to transmit the polling signal over one more or all of the first radio link, the second radio link and the wired link.

In a sixth aspect of this invention, there is provided a method of operating a communications device for use in an alarm as part of an alarm network, the method including the device receiving the modifying information defined hereinabove over one or more of the first radio link, the second radio link and the wired link and modifying the operation of the device.

For each aspect, the device may be arranged so as to carry out the method.

Whilst currently preferred, it is not essential that the attempted communication in the first operation be over a radio link. Similarly, whilst currently preferred, it is not essential that the attempted communication in the second operation be over a radio link. Either or both of these may be over the or another wired link. The attempted communication in the third operation may be over a radio link.

### BRIEF DESCRIPTION OF THE DRAWINGS

Specific embodiments of the invention are now described below by way of example only and with reference to the accompanying drawings, in which:
Figure 1 is a schematic diagram of a communications device for use in an alarm;
Figure 2 is a schematic diagram of an alarm network of which the alarm and hence the device is part;
Figure 3 is another schematic diagram of the alarm network showing further detail omitted from Figure 2 for clarity;
Figure 4 is a flow diagram showing a standby mode of operation of the device; and
Figure 5 is a flow diagram showing a call routine performed in an alarm mode of operation and in a link failure mode of operation of the device.

### SPECIFIC DESCRIPTION OF CERTAIN EXEMPLARY EMBODIMENTS

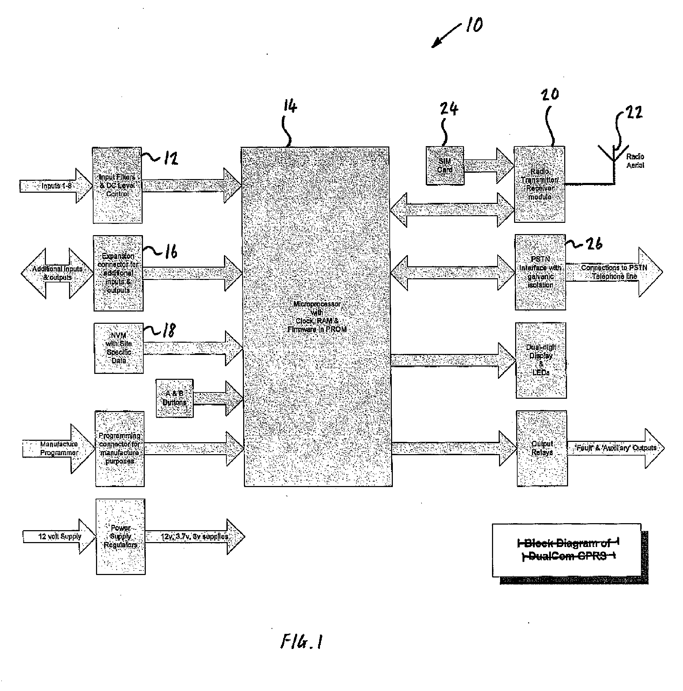

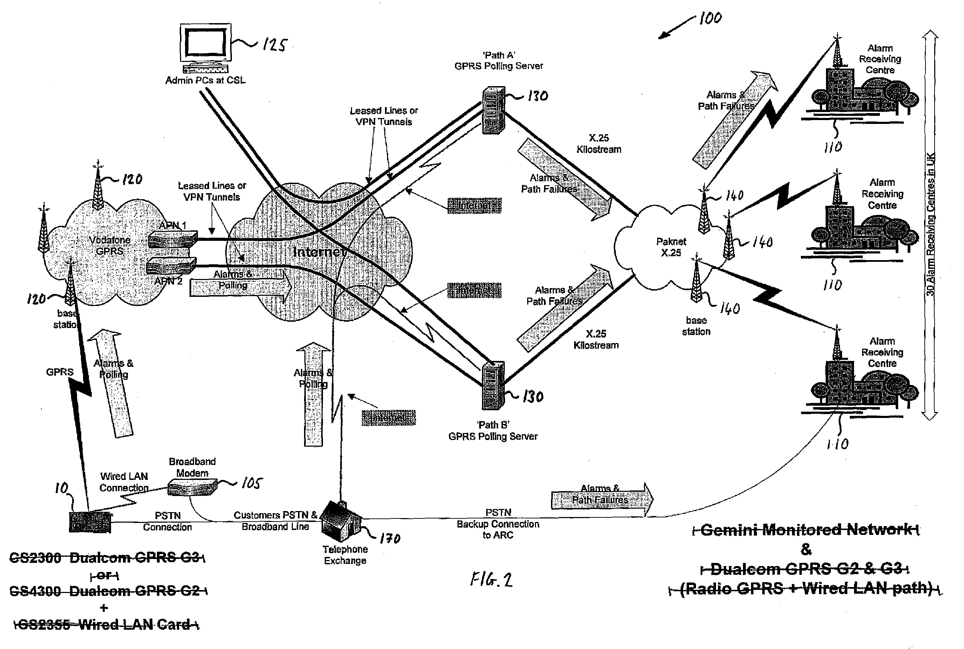

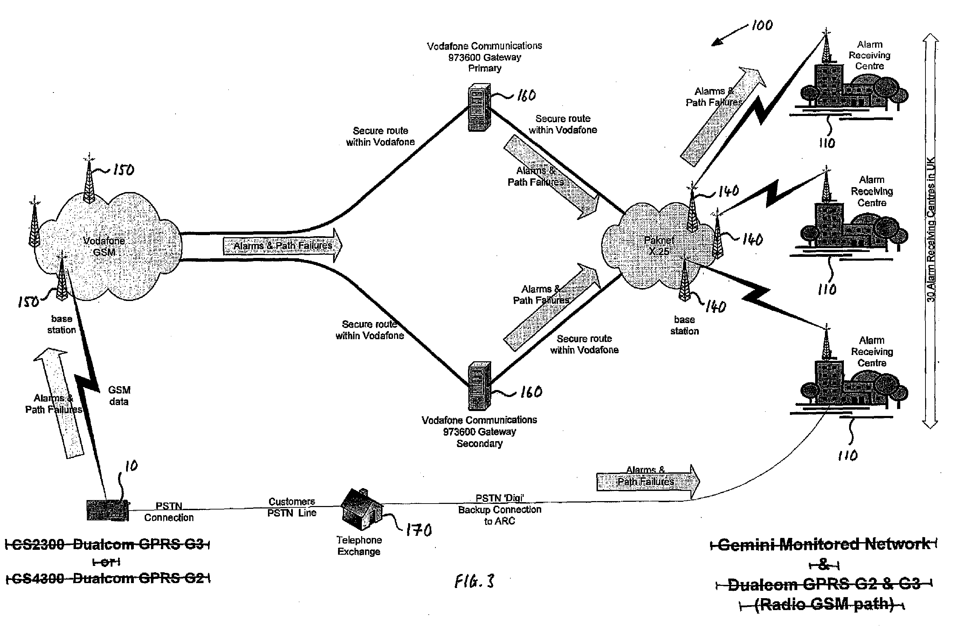

Figure 1 shows a communications device 10 of a first embodiment of this invention for use in an alarm, which in this embodiment is an intruder alarm. Whilst the remainder of the intruder alarm is not shown, it is envisaged that this would include a control panel, a keypad, and several motion detectors. As will be familiar to the skilled addressee, the keypad would be in communication with the panel and used for placing the alarm into an alarmed state and in exiting from that state. The motion detectors would also be in communication with the panel and would each transmit thereto a respective signal indicative of whether or not the detector detects motion. The panel would be connected to the device 10 for communication therewith. In general terms, the device 10 provides a communications link with the intruder alarm and the remainder of an alarm network (shown only in Figure 2 and Figure 3) of which the alarm, and hence the device 10, is part. Before describing the alarm network, however, the device 10 will be described in more detail.

With continued reference to Figure 1, the device 10 includes an input interface 12 that is connected to a microprocessor 14 to provide inputs thereto. The input interface 12 is for connecting to the control panel so as to receive inputs therefrom. The input interface 12 further includes input filters and DC level control circuitry to avoid damage to the microprocessor 14. The microprocessor 14 includes a clock, random access memory (RAM) and firmware stored in programmable read only memory (PROM). The firmware includes instructions in the form of code, executable by the microprocessor 14, to cause the microprocessor 14 to control operation of the device 10. The device 10 also includes an input/output (I/O) expansion interface 16 that is connected to the microprocessor for communication therewith. In this embodiment, the expansion interface 16 includes an Ethernet LAN interface for future needs. The device 10 also includes a non-volatile memory 18 in which is stored information specific to the site at which the device 10 is installed. The device 10 also includes a radio module 20, which is arranged to transmit and receive on the GSM radio network, both with and without using GPRS. Thus, the device 10 may be considered to have both a GPRS link and a standard (i.e. non-GPRS) GSM link, which will be referred to herein as a "GSM link" for simplicity. It will be understood that GPRS stands for General Packet Radio Service and that GSM stands for Global System for Mobile communications (although originally might have stood for Groupe Spécial Mobile). A radio aerial 22 is connected to the radio module 20 and is arranged for operation on the frequency of the GSM network and for use with GPRS. A SIM card 24 is also provided that stores account details and other communication details to enable the radio module 20 to operate on the GSM network and in accordance with GPRS.

The device 10 also includes a telephone line interface 26, which in this embodiment is a PSTN interface. The telephone line interface 26 provides communication with a PSTN telephone line. It will be appreciated that PSTN stands for Public Switched Telephone Network.

In this embodiment, the device 10 includes power supply regulators 19 such that the device is operable to be powered by a 12V power supply.

Figure 2 shows an alarm network 100 of which the alarm and hence the device 10 is part. The device 10 is at one end of the network 100, and alarm receiving centres (ARCs) 110 are at the other end of the network. As will be understood by the skilled addressee, an ARC is an establishment that provides support services to the users of alarms, including intruder alarms. For example, an ARC 110 may contact the police upon receiving a signal that an alarm has been set off, i.e. "raised"; or may contact a fire-fighting service in the case of a fire alarm. The network provides several communications paths between the device 10 and the ARCs 110. These can be divided into radio paths and wired paths.

A first radio path is provided by, at least partly, GPRS. This path is by GPRS radio between the device 10 and a GPRS base station 120; by land-line between the GPRS base station 120 and one of several polling servers 130, over one or more leased lines or VPN tunnels (VPN standing for virtual private network); and by land-line between the polling servers 130 and a base station 140 of a wireless network such Paknet by Vodafone (RTM), over an X.25 network such as that provided by Kilostream. Finally, the Paknet base station 140 communicates by radio with the ARCs 110 over the Paknet wireless network. Thus, the first radio path provides a GPRS communications link between the device 10 and the ARCs 110. This may therefore be considered a first radio link.

Back office servers 125 are provided at the premises of a company with responsibility for maintaining the device 10 and for providing an end user with access to and use of the remainder of the alarm network 100. The back office servers control operation of the polling servers 130 and can communicate with the device 10 via the polling servers 130, over the radio links.

Figure 3 shows further detail of the network 100 shown on Figure 2, this further detail being shown in a separate figure for clarity. With continued reference to Figure 3, a second radio path of the network 100 is provided, at least partly, by GSM, but without using the GPRS service. This path is by GSM radio between the device 10 and a GSM radio base station 150 (which may or may not be the same as the GPRS base station 120); and between the GSM base station 120 and one of the base stations 140 of the Paknet wireless network, over a secure land-line route, which in this embodiment is also provided by Vodafone. This secure land-line route is via a communications gateway secondary 160. As in the first radio path, in this second radio path, the Paknet base station 140 communicates with the ARCs 110 over the Paknet wireless network. Thus, this second radio path provides a GSM communications link between the device 10 and the ARCs 110. This may therefore be considered a second radio link.

With reference again to Figure 2, a wired path is provided using a PSTN line. The wired path is between the telephone line interface 26 of the device 10 and a telephone exchange 170, over a PSTN line; and between the telephone exchange 160 and the ARC 110, also over a PSTN line. Thus, the wired path provides a communications link between the device 10 and the ARCs 110. This may therefore be considered as a wired link between the device 10 and the ARCs 110. The telephone exchange 170 and the polling servers 130 are also connected to the Internet and so a wired link is additionally provided therebetween.

The method of operation of the device 10 will now be described. As mentioned above, the device 10 operates in accordance with instructions in the form of code stored as firmware in the microprocessor 14. It will therefore be understood that the code and hence the firmware is such that, when executed by the microprocessor 14, it causes the microprocessor 14 to operate in accordance with the following description.

Three modes of operation will be described. The method of operation has been divided into three modes at least partly for clarity of description. It is envisaged, however, that the device 10 may operate in one, two or all of the modes at the same time. The three modes are a standby mode of operation, an alarm mode of operation and a link failure mode of operation.

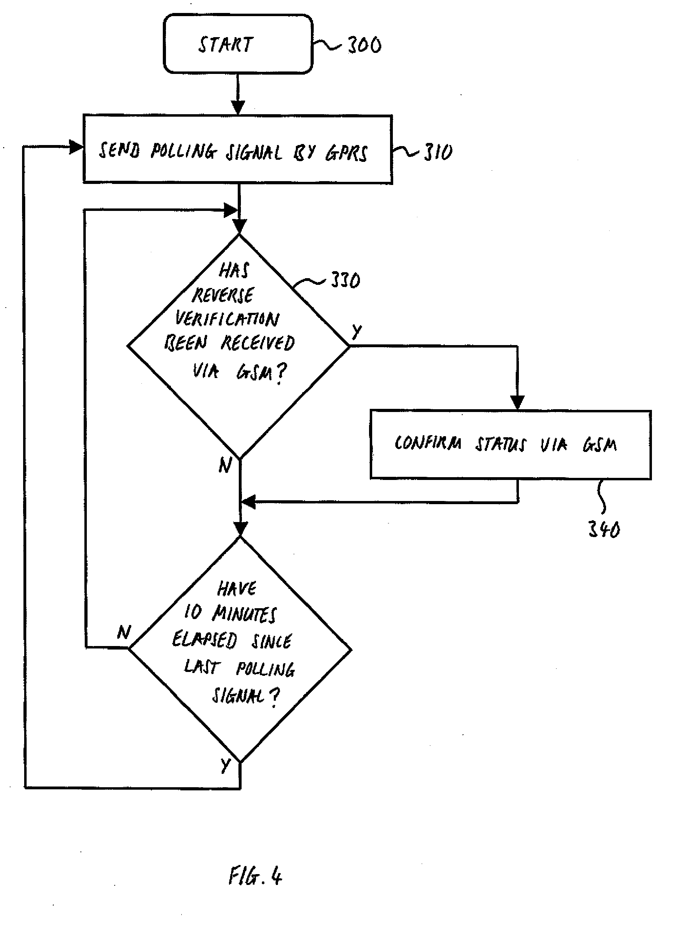

The standby mode of operation will be described first, with reference to Figure 4. In the standby mode, the device periodically sends a signal via the GPRS link to one of the polling servers 130 of the alarm network 100. In this embodiment, the signal is sent every 10 minutes. The signal is a polling signal that indicates to the polling server 130 that the device 10 is operating correctly. It is envisaged that the polling signal may also indicate that other components of the alarm are also operating correctly. If no polling signal has been received by any of the polling servers after 50 minutes, one of the polling servers 130 sends a signal to the device 10 over the GSM link. This signal is termed a "reverse verification notice". It is in effect an enquiry from the polling server 130 as to whether or not the device 10 is operating correctly. Upon receipt of the reverse verification notice, the device 10 attempts to send a reply signal via the GSM link to confirm that the reverse verification notice has been received and that the device 10 is able to respond thereto.

Accordingly, as can be seen in Figure 4, after entering the standby mode at step 300, the method of operation proceeds to step 310 in which the device 10 sends the polling signal via the GPRS link to one of the polling servers 130 of the alarm network 100. The method also includes a delay step 320 that introduces the ten minute delay before returning to step 310 and sending another polling signal. In addition, the method includes step 330 which checks for receipt of a reverse verification notice and, if such a notice has been received, causes the reply signal to be sent at step 340. The reply signal is indicative of the reverse verification notice having been received by the device 10 and of the device 10 being sufficiently operable to send the reply signal.

Upon receiving the reply signal, the polling server 130 takes this to mean that the GPRS link is not (or was not) operational, but that the GSM link is operational. Thus, it is evident that the device 10 is operational and that, of the two radio links, at least the GSM link is operational. This is considered sufficient for acceptable operation of the device 10 and the alarm, and so the polling server 130 does not send any related alert to the ARCs 110. Thus, provision is made against unreliability in the GPRS service.

If no reply signal is received at the polling server 130 from the device 10 in reply to the reverse verification notice, the polling server 130 sends an alert signal to one of the ARCs indicative of this.

The device 10 is considered to be in the standby mode, and operates in accordance with the foregoing description of that mode, regardless of whether or not the alarm has been "set"_{.}

In alternative embodiments, the device 10 additionally sends further polling signals over the wired link. It is anticipated that these would be sent less frequently. For example, if the first embodiment described above were modified to include polling over the wired link, such polling signals may be sent once per day. This allows the integrity of the wired link to be monitored, whilst avoiding the user incurring large PSTN call charges.

Rather like a mobile cellular telephone, the device 10 is constantly monitoring the signal strength of available radio carrier signals (without distinguishing between GSM and GPRS) and ascertaining the base stations with which it can communicate. In this way, the device 10 is able to detect when both the GSM link and GPRS link are inoperable. The device 10 is also able to detect when the PSTN link is inoperable. The device 10 does this by monitoring the DC voltage on the PSTN link from the telephone exchange and/or listening for a dial tone and dialling a number to see whether or not the dial tone ceases.

When the device 10 detects that both the radio links and the wired link are all operable, polling proceeds in accordance with the description of the standby mode set out above. Should, however, the device 10 detect that the radio links (i.e. both the GSM link and the GPRS link) have failed or that the wired link has failed, polling will continue on the remaining link, but usually with increased frequency that is at a "priority rate" that is more frequent than the normal rate of polling when all links are operable. Furthermore, upon detecting that a link has failed, the device enters the link failure mode described hereinbelow with reference to Figure 6 to communicate this failure to one of the polling servers 130 and one of the ARCs 110. Communicating the failure to the polling server 130 allows the polling server 130 to expect the polling at the "priority rate" and on the sole operable link. Communicating the failure to the ARC 110 allows personnel at the ARC 110 to take appropriate action such as, for example, sending a technician to check and if necessary repair the inoperable link. The police would not normally be notified upon receipt by the ARC 110 of the link failure signal as such receipt means that at least one of the links is still operational.

The alarm mode will now be described.

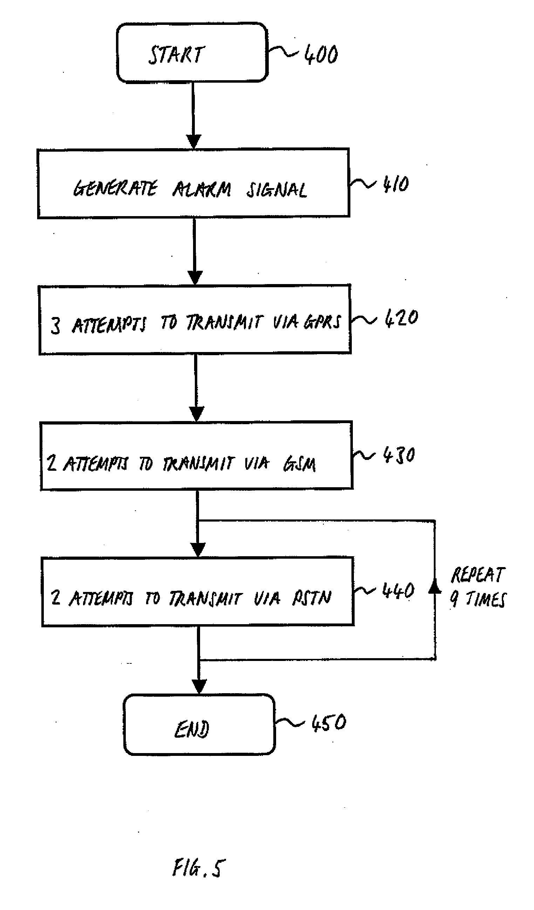

Should the device 10 receive an indication that an alarm condition has been met, such as by receiving a signal from the control panel to the effect that one of the motion detectors has sensed motion whilst the alarm was "set", the device enters the alarm mode. In the alarm mode, the device 10 generates and attempts to send an alarm signal to one of the ARCs 110 such that appropriate action may then be taken. This is done by executing the call routine shown in Figure 5. With continued reference to Figure 5, the call routine starts at step 400. The routine proceeds to step 410 in which the alarm signal is generated, the alarm signal being indicative that the alarm condition has been met. The routine then proceeds through three steps 420, 430, 440 in which the device 10 attempts to transmit the alarm signal to one of the ARCs. In step 420, the device 10 makes three attempts to transmit the alarm signal over the GPRS link. In step 430, the device makes two attempts to transmit the alarm signal over the GSM link. In step 440, the device 10 makes two attempts to transmit the alarm signal over the wired link. Step 440 is then repeated nine times.

Should the device 10 receive back from an ARC 110 a "kiss off" acknowledgement signal (not shown in Figure 5 for simplicity) during the call routine, the routine ends and the device 10 exits the alarm mode.

By making repeated attempts on each of the different links, the device 10 increases the chances of the alarm signal being successfully transmitted to the ARC 110. In particular, should one or two of the links become inoperable, such that only one link remains operable, the attempted transmission on the remaining operable link will result in successful communication with the ARC 110.

The device 10 follows the call routine described above with reference to Figure 5 as long as the device 10 detects that both of the radio links and the wired link are operable. Should, however, the device 10 detect that either of the two radio links are inoperable or the wired link is inoperable, the device 10 will not attempt to make any calls on that link when following the call routine.

The link failure mode will now be described.

As mentioned above in relation to the standby mode described with reference to Figure 4, upon detecting that either (a) the wired link over the PSTN line is inoperable or that (b) both the GPRS link and the GSM link are inoperable, the device 10 enters the link failure mode. In the link failure mode, the device 10 generates and attempts to send a link failure signal to one of the polling servers 130 and then to one of the ARCs 110 such that appropriate action may then be taken. This link failure signal is generated and its sending attempted by the device 10 again following the call routine described above with reference to Figure 5 and as shown in that figure.

Again, by making repeated attempts on each of the different links, the device 10 increases the chances of the link failure signal being successfully transmitted to the polling server 130 and the ARC 110. It could, at first sight, be thought unnecessary to attempt to transmit the link failure signal over the link that is inoperable, but following the same procedure regardless of which link is inoperable simplifies the software and processing operations of the device 10 and additionally increase the chances of the link failure signal being successfully transmitted in the event that the previously inoperable link again becomes operable.

From the foregoing description of the polling mode with reference to Figure 4, it will be understood that, should both radio links have failed, then one of the ARCs will also have received an alert signal from one of the polling servers to the effect that no reply was received from the device 10 to a reverse notification signal from the polling server 130. This would act as confirmation that both radio links are inoperable.

It can therefore be seen that the described embodiment, by providing multiple radio links, and an associated method determining how these links are used, provides an arrangement in which the chances of an alarm signal being conveyed to the ARCs 110 is increased and which is able to continue to operate satisfactorily even if certain of the links should become inoperable.

As can be seen in Figure 2, this embodiment also includes a wired LAN connection from the device 10 to a broadband modem 105. The broadband modem 105 is connected to the PSTN line and hence to the telephone exchange 170. In this way an additional wired link in the form of a broadband link is provided. This broadband link may be used in addition to or instead of the wired link described above.

In a first alternative embodiment, the device 10 described above with reference to Figure 1 to Figure 5 is modified in being arranged to be powered by a power supply supplying any voltage in the range of 9V to 30V. It is envisaged that this would be done by providing the device with two switch mode power supplies. Whilst existing intruder alarms usually operate at 12V, many existing fire alarms operate at 24V. Providing the device with the ability to operate over a wider range of supply voltage therefore means that the same device may be used as either part of an intruder alarm or as part of a fire alarm.

In a second alternative embodiment, the device 10 described above with reference to Figure 1 to Figure 6 is modified to include logging memory means in the form of non-volatile memory. The logging memory means retains a record of all outgoing calls made and/or attempted by the device. Thus, a record may be made of one or more of the number and path of completed and/or failed attempts to transmit the alarm signal to the ARCs, and of the attempted time and date; and of completed and/or failed attempts to transmit the polling signal and, again, of the attempted time and date. Periodically, the device 10 transmits the record of outgoing calls stored on the logging memory means to the back office server 125 and deletes these from the logging memory means. In other words the logging memory means periodically "dumps" the information stored therein to the back office server 125.

The information recorded by the logging memory means in the second alternative embodiment is useful in the event, for example, of an insurance claim resulting from a break in or fire at the premises protected by the device 10. The recorded information indicates what happened at the device 10 and what, if anything, went wrong with the device 10 or in the operation thereof to prevent the alarm being raised or being raised in a timely fashion.

In a third alternative embodiment, the device 10 is provided with a serial interface in the form of a serial bus. The serial bus is a 485, four-wire connection, but it is envisaged that almost any type of serial connection may be used. The serial interface provides an expansion capability to the device 10 in that it allows other electrical devices to be connected thereto for communication therewith.

In a fourth alternative embodiment, it is possible remotely to change the "grade" of the device 10 such that the grade of the alarm of which the device is part is also changed. It will be appreciated by those skilled in this area of technology that the relevant European standard governing intruder alarms (EN 50131) defines four grades of intruder alarm, with Grade 1 alarms providing the lowest level of protection and Grade 4 alarms providing the highest level of protection. Some characteristics of the grades are set out below.

Grade 1 - Low security risk. Potential intruders are expected to have little knowledge of intruder alarms and to have access only to easily available tools. Grade 1 alarms would usually be user-installed domestic alarms.

Grade 2 - Low-to-medium security risk. Potential intruders are expected to have a limited knowledge of intruder alarms and to have access only to a general range of tools. Grade 2 alarms include better domestic alarms and alarms for small shops.

Grade 3 - Medium-to-high security risk. Potential intruders are expected to be familiar with intruder alarms and to have access to a comprehensive range of tools. Grade 3 alarms are usually to be found protecting offices, public houses, nightclubs and larger shops.

Grade 4 - High security risk. Potential intruders are expected to have the ability and resources to plan an intrusion in detail and to have access to a full range of specialised equipment. Grade 4 alarms include those used to protect banks, jewellery stores and bullion storage facilities.

In the present alternative embodiment, the grade of the device 10 determines one, more or all of the following characteristics of the device: the rate at which the device 10 sends polling signals to the polling server 130; the period after which the polling server 130 sends an alert signal to one of the ARCs following a failure by the polling server 130 to receive a polling signal over any of the links from the device and a failure by the polling server to receive a signal from the device indicating that a reverse verification signal has been received.

The firmware of the device 10 contains a record of the relevant settings that determine these characteristics and hence the grade of the device 10. A record of the grade of the device is also stored at the polling server 130.

In order to change the grade of the device 10, the device 10 receives update information from the back office server 125, via the polling server 130, over one or both of the radio links. The update information is such that it updates the relevant settings recorded in the firmware of the device 10 to change the grade of that device 10 and updates the polling server 130 with the new grade for the particular device 10.

Included below are three tables, one for each of Grade 2, 3 and 4 and setting out the relevant settings of the device 10.

**Table 1: Example of Grade 2 Settings**

| | **Status of device as perceived by polling server** | **Frequency of radio polling** | **Frequency of wired polling** | **Action by the polling server** |
|---|---|---|---|---|
| **Scenario 1:** | All links are OK | Normal rate (1poll/hour) | Normal rate (1poll/week) | If polling server receives: no polling signal on any link; no reply to reverse verification notice; and no link failure signal, polling server alerts ARC after 1 day |
| **Scenario 2:** | Radio link has failed | No polling on failed link | Priority rate (1poll/week) | If polling server receives: no polling signal on any link; and no reply to reverse verification notice, polling server alerts ARC after up to 1 week |
| **Scenario 3:** | Wired link has failed | Priority rate (1 poll/hour) | No polling on failed link | If polling server receives: no polling signal on any link; and no reply to reverse verification notice, polling server alerts ARC after 1 day |

**Table 2: Example of Grade 3 Settings**

| | **Status of device as perceived by polling server** | **Frequency of radio polling** | **Frequency of wired polling** | **Action by the polling server** |
|---|---|---|---|---|
| **Scenario 1:** | All links are OK at the device | Normal rate (1 poll/10 minutes) | Normal rate (1 poll/day) | If polling server receives: no polling signal on any link; no reply to reverse verification notice; and no link failure signal, polling server alerts ARC after 1 hour |
| **Scenario 2:** | Device's radio link has failed | No polling on failed link | Priority rate (1poll/day) | If polling server receives: no polling signal on any link; and no reply to reverse verification notice, polling server alerts ARC after up to 1 day |
| **Scenario 3:** | Device's wired link has failed | Priority rate (1 poll/10 minutes) | No polling on failed link | If polling server receives: no polling signal on any link; and no reply to reverse verification notice, polling server alerts ARC after up to 20 minutes |

**Table 3: Example of Grade 4 Settings**

| | **Status of device as perceived by polling server** | **Frequency of radio polling** | **Frequency of wired polling** | **Action by the polling server** |
|---|---|---|---|---|
| **Scenario 1:** | All links are OK at the device | Normal rate (1 poll/10 minutes) | Normal rate (1 poll/day) | If polling server receives: no polling signal on any link; no reply to reverse verification notice; and no link failure signal, polling server alerts ARC after 1 hour |
| **Scenario 2:** | Device's radio link has failed | No polling on failed link | Priority rate (1poll/3 minutes) | If polling server receives: no polling signal on any link; and no reply to reverse verification notice, polling server alerts ARC after 7 minutes |
| | | | | If continues, may use back office server to set device to poll I/day on wired link |
| **Scenario 3:** | Device's wired link has failed | Priority rate (1 poll/3 minutes) | No polling on failed link | If polling server receives: no polling signal on any link; and no reply to reverse verification notice, polling server alerts ARC after 7 minutes |

The device of this embodiment may be any of Grade 2, 3 or 4.

One, more or all of the features of the additional embodiments described hereinabove may be combined in further embodiments. These features are described above in separate embodiments mainly for clarity.

## Claims

1. A method of operating a communications device for use in an alarm as part of an alarm network, the device being arranged to establish a first radio link, a second radio link and a wired link with a part of the network remote from the alarm so as to communicate therewith, the method comprising the steps of the device:
a) in a first operation, attempting to communicate with the remote part of the network via the first radio link; and then
b) in a second operation, attempting to communicate with the remote part via the second radio link.

2. A method according to claim 1 and including the additional step of, in an additional operation, attempting to communication with the remote part via the wired link.

3. A method according to claim 2 wherein the additional operation is carried out as a third operation subsequent to the second operation.

4. A method according to any preceding claim, wherein the device makes a plurality of attempts to communicate with the remote part in the first operation and/or the second operation and/or, when dependent on claim 2 or claim 3, in the additional operation.

5. A method according to any preceding claim, wherein the communication with the remote part of the network comprises the transfer of information indicative of the status of the device.

6. A method according to claim 5, wherein the information indicative of the status of the device comprises a polling signal indicative of the device being operational.

7. A method according to claim 5 or claim 6, wherein the information indicative of the status of the device comprises an alert signal indicative of the status being such that human intervention is desirable.

8. A method according to claim 7, wherein the alert signal is an alarm signal indicative of the alarm condition being met.

9. A method according to claim 7 or claim 8, wherein the alert signal is a link failure signal indicative of one or more of the first radio link, the second radio link and the wired link not being operational.

10. A method according to any one of claim 6 to claim 9, wherein the method includes the step of performing, in a standby mode of operation, the first operation so as to transmit periodically the polling signal via the first radio link, and, upon the device receiving an error signal, performing the second operation so as to transmit a confirmatory signal confirming receipt by the device of the error signal.

11. A method according to claim 10, wherein the error signal is received by the device over the second radio link.

12. A method according to claim 10 or claim 11, wherein the error signal is indicative of at least one polling signal not having been received by the or another remote part of the network over the first radio link.

13. A method according to any one of claim 7 to claim 9, wherein the method includes the step of the device performing the first operation so as to make a predetermined number of attempts to transmit the alert signal via the first radio link; and then performing the second operation so as to make a predetermined number of operations to transmit the alert signal via the second radio link; and, optionally, the method further includes the step of performing the third operation so as to make a predetermined number of attempts to transmit the alert signal via the wired link

14. A method accordingly any preceding claim, where the first and/or second radio link makes use of a mobile telephone radio frequency and/or mobile telephone communications protocol.

15. A method according to any preceding claim, where one of the first and second radio link is a GPRS link and the other of the first and second radio link is a GSM data link in which GPRS is not used.

16. A method according to any preceding claim and further including the device detecting whether or not one, more or all of the first radio link, the second radio link and the wired link are operational; and, upon detecting that one, more or all of the first radio link, the second radio link and the wired link is or are not operational, attempting to communicate with the remote part via the, each, or one of, the remaining links.

17. A communications device for use in an alarm as part of an alarm network, wherein, the device is arranged to establish a first radio link, a second radio link and a wired link with a part of the network remote from the alarm so as to communicate therewith, and wherein the device is further arranged to attempt to communicate with the remote part of the network in a first operation via the first radio link and then in a second operation via the second radio link.

18. A device according to claim 17 and further arranged to carry out the steps of a method according to any one of claim 1 to claim 16.

19. A device according to any one of claim 17 or claim 18 and further including logging memory means arranged to retain a record of one, more or all attempts at outgoing communication made by the device, and, optionally, is further arranged to transmit information indicative of the record to the or another remote part of the network.

20. A device according to any one of claim 17 to claim 19 and further arranged to receive modifying information over one, more or all of the first radio link, the second radio link and the wired link and in response thereto to modify operation of the device..

21. An alarm including a communications device according to claim 17 or claim 18.

22. A record carrier having thereon or therein a record of instructions executable by processing means to cause those means to carry out a method according to any one of claim 1 to claim 16.

23. A computer program containing code portions which when read and executed by processing means cause those means to carry out a method according to any one of claim 1 to claim 16.
